# EUROPEAN PATENT SPECIFICATION

(11) **EP 3 177 465 B1**
(45) Date of publication and mention of the grant of the patent: **12.01.2022**
(21) Application number: 15766626.4
(22) Date of filing: 07.08.2015
(51) Int. Cl.: B60B 3/00, B60B 11/02, B60B 3/12, B60B 3/04, B60B 3/16

(54) **WHEEL FOR INDUSTRIAL AND COMMERCIAL VEHICLES**
RAD FÜR INDUSTRIE- UND NUTZFAHRZEUGE
ROUE POUR VÉHICULES INDUSTRIELS ET COMMERCIAUX

(30) Priority: 08.08.2014 IT TO20140648
(43) Date of publication of application: 14.06.2017
(73) Proprietor: GIANETTI FAD WHEELS S.r.l., 20816 Ceriano Laghetto (Monza e Brianza) (IT)
(72) Inventor: FINZI, Andrea, I-20050 TREGASIO Frazione di TRIUGGIO (Milano) (IT); BAZZONI, Davide, I-21040 CISLAGO (Varese) (IT); PERRIS MAGNETTO, Gabriele, I-10098 RIVOLI (Torino) (IT)
(74) Representative: Vanzini, Christian
(86) International application number: PCT/IB2015/056013
(87) International publication number: WO 2016/020890

(56) References cited:
- DE-U1- 29 825 055
- FR-A1- 2 518 933
- US-A- 2 317 311
- US-A- 2 625 438

## Description

The present invention relates to a wheel for industrial and commercial vehicles.

More specifically, the invention relates to a wheel of the type defined in the preamble of the accompanying Claim 1.

DE 298 25 055 U1 describes a wheel of said type, in which the disc is shaped in such a way that, when a pair of said wheels is used in a twinned configuration, there is only a reduced contact area between the discs of said wheels.

Other wheels for motor vehicles are described in FR 2 518 933 A1, JP H09 123702A, US 2 625 438 and US 5 971 496 A.

It is an object of the present invention to provide an improved wheel for industrial and commercial vehicles.

This and other objects are achieved according to the invention by a wheel, the main features of which are defined in the accompanying Claim 1.

When used in a twinned configuration, the wheels according to the invention advantageously have a noticeably greater reciprocal contact surface between the respective discs.

Expediently, a wheel according to the invention is formed in such a way that, before the disc is fastened to the hub, the aforementioned radially outer contact area protrudes axially towards the inside of the wheel relative to the radially inner contact area.

When fastening the disc to the hub, this feature makes it possible to elastically preload the radially inner part of the disc, and this makes it possible to counter loosening of the fixing bolts.

Further features and advantages of the invention will become apparent from the detailed description hereinbelow, this being provided purely by way of non-limiting example and with reference to the accompanying drawings, in which:
Figure 1 is a perspective view of a wheel according to the present invention, as viewed from the outer side;
Figure 2 shows the wheel as shown in Figure 1, as viewed from the inner side;
Figures 3 and 4 are partially sectioned partial perspective views showing, on an enlarged scale, a number of features of the wheel as shown in Figures 1 and 2;
Figure 5 is a partial view in axial section of the wheel shown in the preceding figures;
Figures 6 and 7 are partially sectioned partial perspective views showing a second embodiment of a disc for a wheel according to the present invention; and
Figures 8 and 9 are partial views in axial section along the lines VIII-VIII and IX-IX as shown in Figure 6.

In the drawings, a wheel for industrial and commercial vehicles according to the present invention is denoted as a whole by 1.

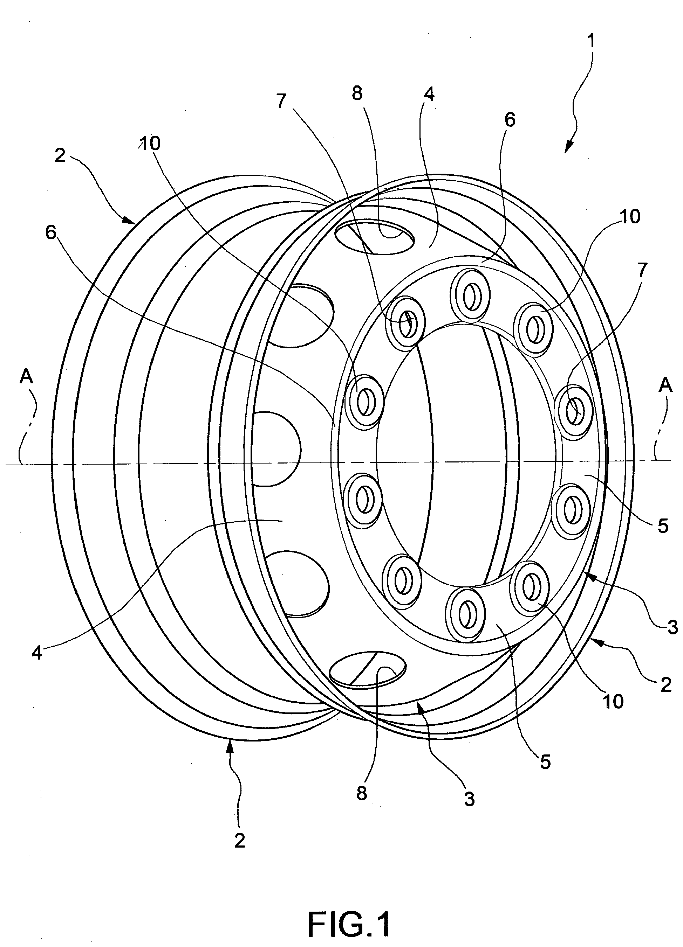

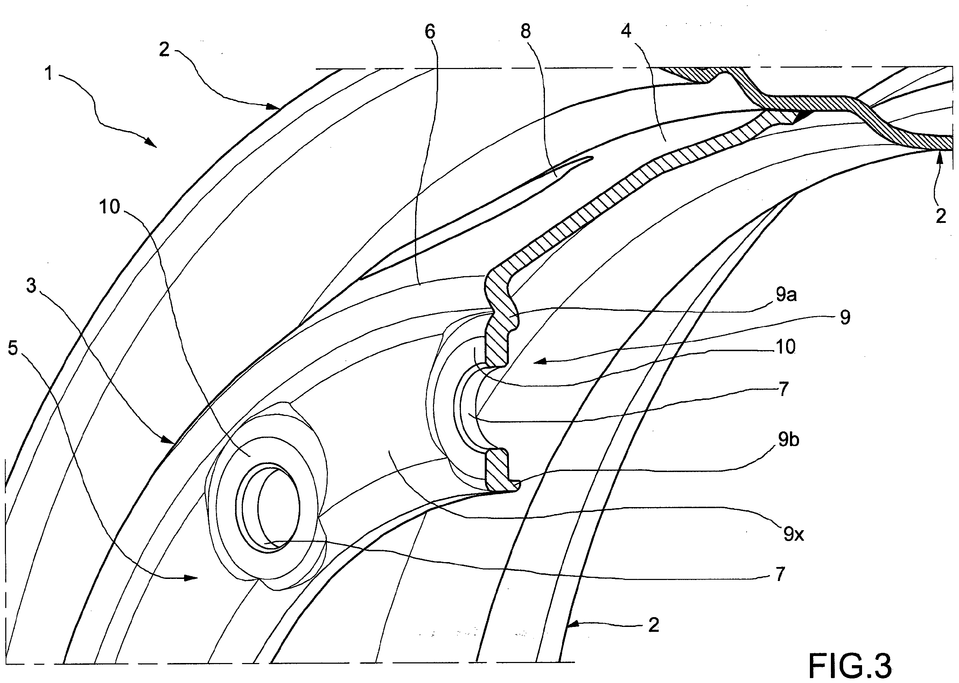

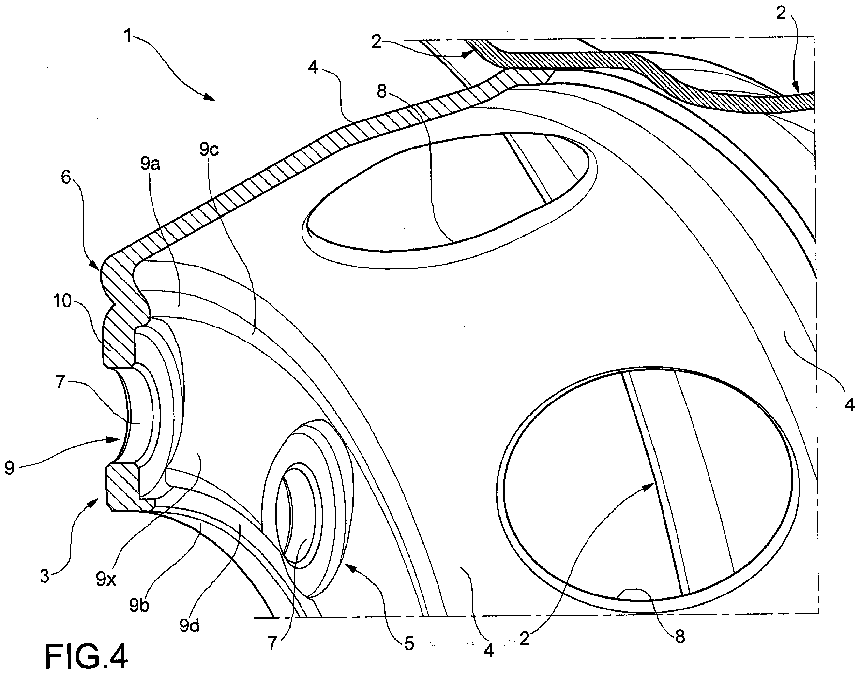

The wheel 1 shown in Figures 1 to 5 comprises a rim 2 made of a metal material, for example steel.

In the exemplary embodiment shown, the rim 2 is of a type known per se, for example of the type shown in the prior European patent application EP 1 790 500 A1.

The rim 2 is intended to carry a tyre, for example of the tubeless type.

A disc denoted as a whole by 3 is fixed to the inside of the rim 2, said disc also being made of a metal material, for example steel.

The disc 3 has an essentially annular general shape, and comprises a radially outer annular part 4, connected to the inner surface of the rim 2, for example by means of soldering, and a radially inner annular part 5 which fits together with the outer portion 4 at an annular transition part 6.

The inner annular portion 5 of the disc 3 is provided with a plurality of openings 7 for the passage of means, such as bolts, for the fastening thereof to a hub of an axle, the latter being of a type known per se and therefore not being shown.

In the embodiment shown, the outer annular portion 4 of the disc has an essentially frusto-conical form converging to the outside, in the direction of the axis of the wheel, and is provided with a plurality of openings, denoted by 8, for the ventilation of the brake associated with the wheel.

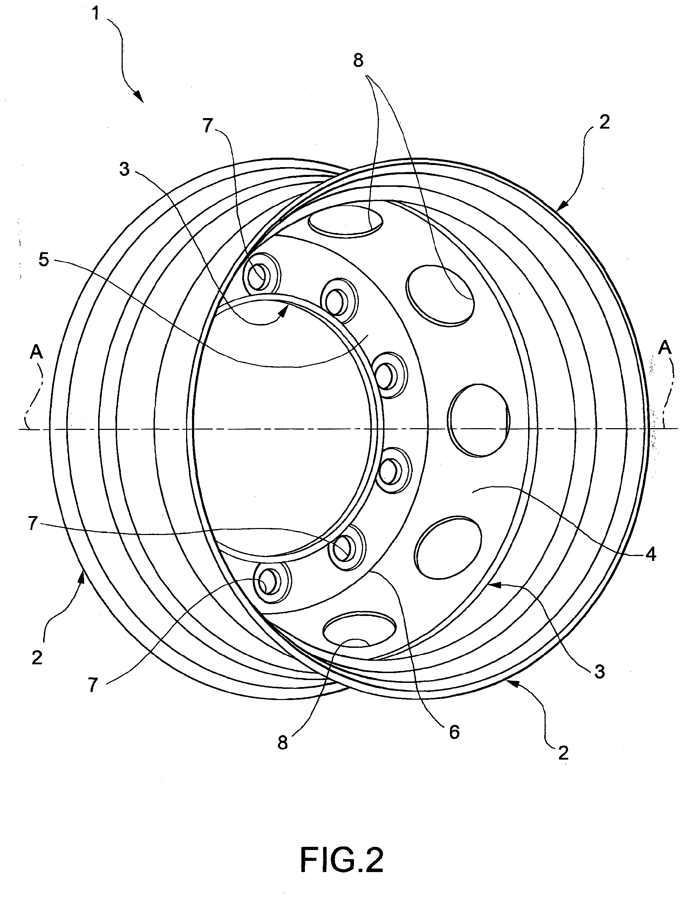

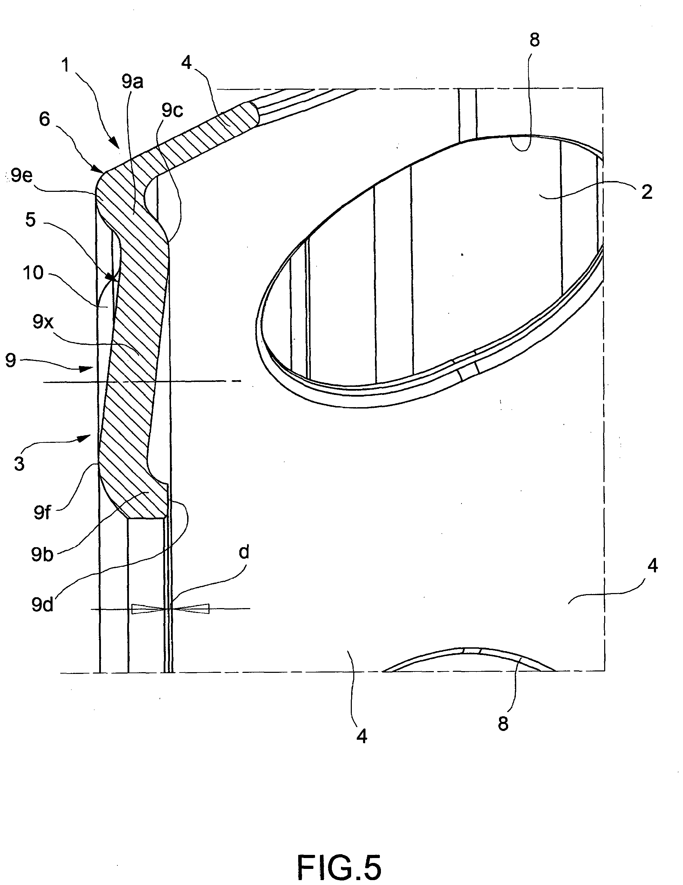

As can be seen more clearly in Figure 5, the radially inner part 5 of the disc includes an annular wall 9 with an essentially frusto-conical radially intermediate main portion 9x, having a wide opening angle (greater than that of the outer part 4 of the disc) and converging to the outside of the wheel towards the axis of the latter, denoted by A-A in Figures 1 and 2.

The annular wall 9 has a radially outer peripheral portion 9a, bent towards the outside of the wheel, as well as a radially inner peripheral portion 9b, bent towards the inside of the wheel (see in particular Figure 5).

The outer peripheral portion 9a joins up with the outer annular part 4 of the disc 3 through the transition part 6, the latter having a convexity facing towards the outside of the wheel and a concavity facing towards the inside thereof.

The peripheral portions 9a and 9b of the annular wall 9 define corresponding contact areas 9c and 9d having an annular circular shape, these facing towards the inside of the wheel 1 and being intended to be clamped against the hub.

A plurality of protruding reliefs 10 are formed in the frusto-conical wall 9, these expediently being in the form of annular bosses embossed towards the outside of the wheel 1. The openings 7 are formed in these reliefs or bosses 10.

The axes of the openings 7 preferably extend in a direction which is at least approximately parallel to the axis A-A of the wheel 1.

With reference to Figure 5, the radially inner portion 5 of the disc 3 is preferably formed in such a way that, before the disc 3 is fastened to the hub, the radially outer contact area 9c protrudes axially towards the inside of the wheel beyond the radially inner contact area 9d, by a measure denoted by d in said figure.

Owing to this feature, when the disc 3 is clamped to the hub, the radially inner portion 5 of said disc is elastically deformed, in such a way as to bring the contact area 9d substantially in coplanarity with the contact area 9c against the flat front surface of the hub.

The radially inner part 5 of the disc 3 is therefore elastically preloaded, and this makes it possible to counter loosening of the bolts for fixing the wheel 1 to the hub.

With reference once again in particular to Figure 5, the radially peripheral portions 9a and 9b of the annular wall 9 of the disc 3 define further contact areas 9e and 9f, facing towards the outside of the wheel 1 and intended to be clamped against the corresponding outer contact areas of an identical wheel assembled in a twinned configuration.

Said peripheral portions 9a and 9b of the annular wall 9 as well as the transition part 6 between the parts 4 and 5 of the disc 3 provide said disc 3 with a "ribbed" configuration, with a high rigidity. This makes it possible to form at least the disc 3 from a thinner metal material, with a resultant substantial reduction in the weight.

In the exemplary embodiment shown in Figures 1-5, the contact areas 9c, 9d and 9e, 9f are continuous. In other embodiments, said contact areas may moreover be discontinuous.

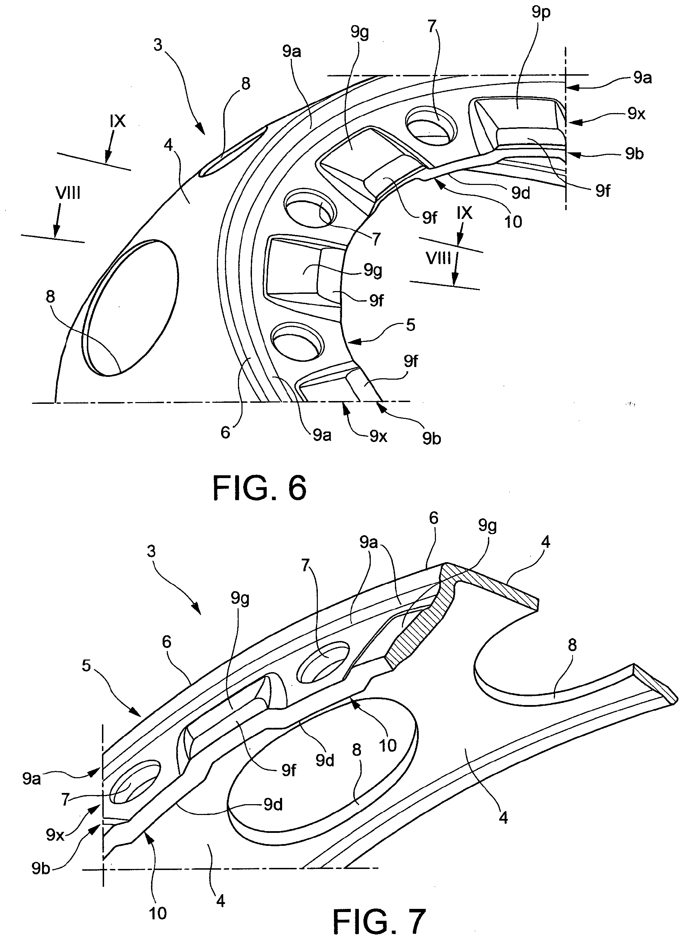

Figures 6-9 show an embodiment variant which differs in a number of features of the disc 3 with respect to the wheel shown in Figures 1-5.

In Figures 6-9, the same reference numerals as those used previously have again been attributed to parts and elements which are the same as or correspond substantially to parts and elements already described.

In the variant shown in Figures 6-9, the annular wall 9 of the disc 3 comprises an outer peripheral portion 9a bent towards the outside, a radially intermediate portion 9x and a radially inner peripheral portion 9b.

The radially intermediate portion 9x of the wall 9 has a substantially circumferentially undulating shape and comprises parts 9g protruding towards the outside of the wheel, in alternation with parts 10 protruding towards the inside.

The parts 9g are inclined with respect to the axis of the rim 3 and of the wheel and converge towards the outside of the wheel in the direction of said axis. These parts 9g can be portions of the same frusto-conical wall.

The parts 10 embossed towards the inside of the wheel have through-openings 7 for the passage of the means for fastening the wheel to the hub of an axle.

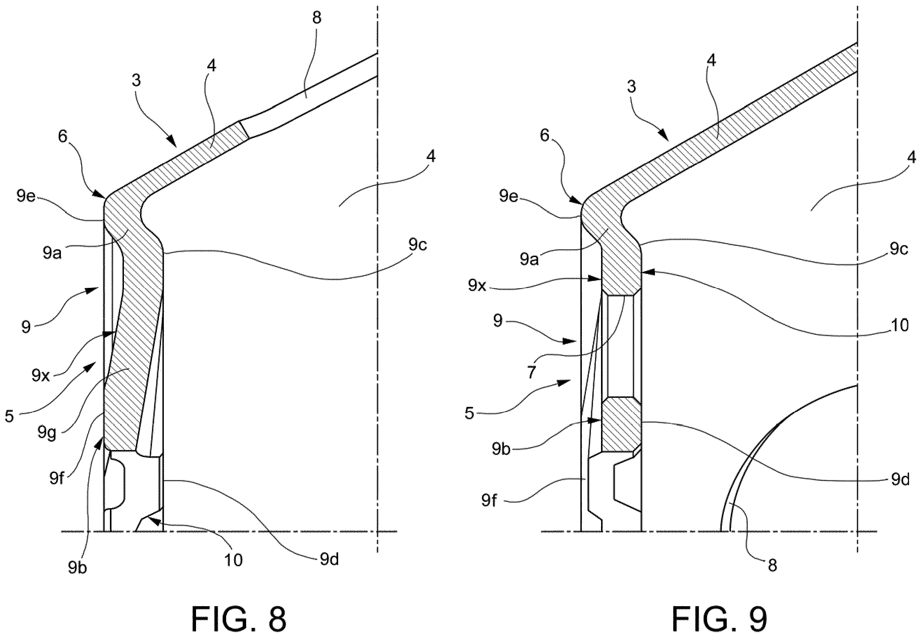

The inner peripheral portion 9b of the annular wall 9 undulates circumferentially like the intermediate portion 9x, and, at the parts 9g embossed towards the outside, has in axial section (see Figure 8) a curvature towards the inside of the wheel (relative to the parts 9g, which instead converge towards the outside).

The parts of the portion 9b of the wall 9 which are circumferentially included between consecutive parts 9g of the intermediate portion 9x extend substantially like radial extensions of the parts 10 of said portion 9x, and are therefore also embossed towards the inside of the wheel.

Owing to this configuration, the annular wall 9 with the radially outer portions 9a and radially inner portions 9b thereof defines radially spaced apart inner contact areas 9c and 9d (see in particular Figure 9), these being intended to be clamped against the hub of an axle.

Whereas the contact area 9c has an annular continuous shape, the contact area 9d is discontinuous and is formed by a circumferential succession of ridges, each at a formation 10 of the intermediate wall portion 9x.

Even though it is not shown in the drawings, in this case, too, the contact ridges 9d can be offset axially towards the outside of the wheel, with respect to the contact area 9a, to realize the anti-loosening effect for the fixing bolts already described above.

The annular wall 9 with the outer portions 9a and inner portions 9b thereof defines further contact areas 9e and 9f, facing towards the outside of the wheel and intended to be clamped against the corresponding outer contact areas of an identical wheel in a twinned configuration.

In this case, too, the radially outer contact surface or area 9e has an annular continuous shape, whereas the contact area 9f is discontinuous and is formed by a circumferential succession of ridges, each at a formation 9g of the intermediate portion 9x of the annular wall 9.

The particular configuration of the annular wall 9 described above with reference to Figures 6 to 9 makes it possible to increase the overall contact area between the disc 3 and the hub which carries the wheel. This makes it possible to reduce the extent to which the fixing bolts are fastened and to counteract fretting and the associated phenomena of corrosive wear.

This configuration also takes on particular interest independently of the use of the wheels according to the invention in a twinned configuration.

Clearly, without departing from the principle of the invention, the embodiments and the constructional details may be greatly varied with respect to that described and shown purely by way of non-limiting example, without thereby departing from the scope of the invention as defined in the accompanying claims.

## Claims

1. Wheel (1) for industrial and commercial vehicles, comprising
a rim (2), made of a metal material, intended to carry a tyre, and
an essentially annular disc (3), also made of a metal material, fixed coaxially in the rim (2); and wherein
the disc (3) comprises a radially outer annular part (4), connected to the inner surface of the rim (2), as well as a radially inner annular part (5) provided with a plurality of openings (7) for the passage of means for the fastening thereof to a hub of an axle;
wherein the radially inner part (5) of the disc (3) includes an annular wall (9) having a radially outer peripheral portion (9a) bent towards the outside, a radially intermediate portion (9x) including at least a plurality of circumferentially successive wall portions (9g) converging to the outside of the wheel (1) towards the axis (A-A) of the latter, and a radially inner peripheral portion (9b), which, at least at said wall portions (9g), is bent with respect to the latter towards the inside of the wheel (1); said radially outer and inner peripheral portions (9a, 9b) defining corresponding contact areas (9c, 9d), radially outer and inner, respectively, facing towards the inside of the wheel (1) and intended to be clamped against said hub;
said annular wall (9) having a plurality of reliefs (10) which protrude in a direction which is at least approximately parallel to the axis (A-A) of the wheel (1), in each of them there being provided one of said openings (7);
the wheel (1) being **characterized in that** said peripheral portions (9a, 9b) of the annular wall (9) define further outer contact areas (9e, 9f), facing towards the outside of the wheel (1) and intended to be clamped against the corresponding outer contact areas of an identical wheel assembled in a twinned configuration.

2. Wheel according to Claim 1, wherein said reliefs (10) comprise each a wall portion (9) shaped like a boss, embossed towards the outside of the wheel (1).

3. Wheel according to Claim 1 or 2, wherein said, radially outer contact area (9c) has an annular circular shape, and the radially inner contact area (9d) has an annular continuous or discontinuous shape.

4. Wheel according to one of the preceding claims, wherein, before the disc (3) is fastened to the hub, the radially outer contact area (9c) protrudes towards the inside of the wheel (1) relative to the radially inner contact area (9d).

5. Wheel according to any of the preceding claims, wherein the radially intermediate portion (9x) of said annular wall (9) has a substantially circumferentially undulating shape and comprises a plurality of first parts protruding towards the outside (9g) in alternation with a corresponding plurality of parts protruding towards the inside (10).

6. Wheel according to Claim 5, wherein the radially inner peripheral portion (9b) of the intermediate portion (9x) of the annular wall (9) also has a circumferentially undulating shape and defines a plurality of outer contact ridges (9f) in circumferential alternation with inner contact areas (9d).

7. Wheel according to Claim 5 or Claim 6, wherein said openings (7) are formed in the parts protruding towards the inside of the intermediate portion (9x) of said annular wall (9).

## Patentansprüche

1. Rad (1) für industrielle und kommerzielle Fahrzeuge, mit
einer Felge (2), die aus einem Metallmaterial ausgebildet ist, die dazu gedacht ist, einen Reifen zu tragen, und
einer im Wesentlichen ringförmigen Scheibe (3), die ebenfalls aus einem Metallmaterial ausgebildet ist, die koaxial in der Felge (2) befestigt ist; und bei dem
die Scheibe (3) einen radial äußeren ringförmigen Teil (4), der mit der inneren Oberfläche der Felge (2) verbunden ist, sowie einen radial inneren ringförmigen Teil (5), der mit einer Mehrzahl von Öffnungen (7) für den Durchgang von Mitteln für die Befestigung davon an einer Nabe einer Achse versehen ist, aufweist;
bei dem der radial innere Teil (5) der Scheibe (3) eine ringförmige Wand (9) aufweist, die einen radial äußeren Umfangsabschnitt (9a), der in Richtung der Außenseite gebogen ist, einen radialen Zwischenabschnitt (9x), der zumindest eine Mehrzahl umfänglich aufeinanderfolgender Wandabschnitte (9g), die zu der Außenseite des Rads (1) in Richtung der Achse (A-A) des letzteren konvergieren, aufweist, und einen radial inneren Umfangsabschnitt (9b), der, zumindest an besagten Wandabschnitten (9g), in Bezug auf die letzteren in Richtung der Innenseite des Rads (1) gebogen ist, aufweist; welche besagten radial äußeren und inneren Umfangsabschnitte (9a, 9b) entsprechende Kontaktbereiche (9c, 9d), radial äußere bzw. innere, definieren, die in Richtung der Innenseite des Rads (1) gewandt sind und dazu gedacht sind, gegen besagte Nabe geklemmt zu werden;
besagte ringförmige Wand (9) eine Mehrzahl von Vertiefungen (10) aufweist, die in einer Richtung, die zumindest annähernd parallel zu der Achse (A-A) des Rads (1) ist, vorstehen, in jeder derer eine besagter Öffnungen (7) vorgesehen ist;
welches Rad (1) **dadurch gekennzeichnet ist, dass** besagte Umfangsabschnitte (9a, 9b) der ringförmigen Wand (9) weitere äußere Kontaktbereiche (9e, 9f) definieren, die in Richtung der Außenseite des Rads (1) gewandt sind und dazu gedacht sind, gegen die entsprechenden äußeren Kontaktbereiche eines identischen Rads, das in einer Zwillingsausgestaltung montiert wird, geklemmt zu werden.

2. Rad nach Anspruch 1, bei dem besagte Vertiefungen (10) jeweils einen Wandabschnitt (9) aufweisen, der wie ein Vorsprung geformt ist, der in Richtung der Außenseite des Rads (1) ausgebaucht ist.

3. Rad nach Anspruch 1 oder 2, bei dem besagter radial äußere Kontaktbereich (9c) eine ringförmige kreisförmige Form aufweist, und der radial innere Kontaktbereich (9d) eine ringförmige kontinuierliche oder diskontinuierliche Form aufweist.

4. Rad nach einem der vorhergehenden Ansprüche, bei dem, bevor die Scheibe (3) an der Nabe befestigt wird, der radial äußere Kontaktbereich (9c) in Richtung der Innenseite des Rads (1) relativ zu dem radial inneren Kontaktbereich (9d) vorsteht.

5. Rad nach einem der vorhergehenden Ansprüche, bei dem der radiale Zwischenabschnitt (9x) besagter ringförmigen Wand (9) eine im Wesentlichen umfänglich wellenförmige Form aufweist und eine Mehrzahl erster Teile, die in Richtung der Außenseite (9g) vorstehen, alternierend mit einer entsprechenden Mehrzahl von Teilen, die in Richtung der Innenseite (10) vorstehen, aufweist.

6. Rad nach Anspruch 5, bei dem der radial innere Umfangsabschnitt (9b) des Zwischenabschnitts (9x) der ringförmigen Wand (9) ebenfalls eine umfänglich wellenförmige Form aufweist und eine Mehrzahl äußerer Kontaktrippen (9f) umfänglich alternierend mit inneren Kontaktbereichen (9d) definiert.

7. Rad nach Anspruch 5 oder Anspruch 6, bei dem besagte Öffnungen (7) in den Teilen, die in Richtung der Innenseite vorstehen, des Zwischenabschnitts (9x) besagter ringförmigen Wand (9) ausgebildet sind.

## Revendications

1. Roue (1) pour véhicules industriels et commerciaux, comprenant
une jante (2), faite d'un matériau métallique, destinée à porter un pneu, et
un disque (3) essentiellement annulaire, également fait d'un matériau métallique, fixé coaxialement dans la jante (2) ; et dans laquelle
le disque (3) comprend une partie annulaire extérieure radialement (4), reliée à la surface intérieure de la jante (2), ainsi qu'une partie (5) annulaire intérieure radialement dotée d'une pluralité d'ouvertures (7) pour le passage de moyens pour la fixation de celles-ci à un moyeu d'un essieu ;
dans laquelle la partie (5) intérieure radialement du disque (3) inclut une paroi annulaire (9) ayant une portion périphérique (9a) extérieure radialement courbée vers l'extérieur, une portion intermédiaire (9x) radialement incluant au moins une pluralité de portions de paroi (9g) successives circonférentiellement convergeant vers l'extérieur de la roue (1) vers l'axe (A-A) de cette dernière, et une portion périphérique (9b) intérieure radialement, qui, au moins au niveau desdites portions de paroi (9g), est courbée par rapport à ces dernières vers l'intérieur de la roue (1) ; lesdites portions périphériques (9a, 9b) extérieure et intérieure radialement définissant des zones de contact (9c, 9d) correspondantes, extérieure et intérieure radialement, respectivement, orientées vers l'intérieur de la roue (1) et destinées à être serrées contre ledit moyeu ;
ladite paroi annulaire (9) ayant une pluralité de reliefs (10) qui font saillie dans une direction qui est au moins approximativement parallèle à l'axe (A-A) de la roue (1), dans chacun d'eux étant prévue une desdites ouvertures (7) ;
la roue (1) étant **caractérisée en ce que** lesdites portions périphériques (9a, 9b) de la paroi annulaire (9) définissent en outre des zones de contact extérieures (9e, 9f) orientées vers l'extérieur de la roue (1) et destinées à être serrées contre les zones de contact extérieures correspondantes d'une roue identique assemblée dans une configuration jumelée.

2. Roue selon la revendication 1, dans laquelle lesdits reliefs (10) comprennent chacun une portion de paroi (9) formée comme un estampage, estampée vers l'extérieur de la roue (1).

3. Roue selon la revendication 1 ou 2, dans laquelle ladite zone de contact (9c) extérieure radialement a une forme circulaire annulaire, et la zone de contact (9d) intérieure radialement a une forme continue ou discontinue annulaire.

4. Roue selon l'une des revendications précédentes, dans laquelle, avant que le disque (3) ne soit fixé au moyeu, la zone de contact (9c) extérieure radialement fait saillie vers l'intérieur de la roue (1) relativement à la zone de contact (9d) intérieure radialement.

5. Roue selon l'une quelconque des revendications précédentes, dans laquelle la portion intermédiaire (9x) radialement de ladite paroi annulaire (9) a une forme onduleuse sensiblement circonférentiellement et comprend une pluralité de premières parties faisant saillie vers l'extérieur (9g) en alternance avec une pluralité correspondante de parties faisant saillie vers l'intérieur (10).

6. Roue selon la revendication 5, dans laquelle la portion périphérique (9b) intérieure radialement de la portion intermédiaire (9x) de la paroi annulaire (9) a également une forme onduleuse circonférentiellement et définit une pluralité d'arêtes de contact extérieures (9f) en alternance circonférentielle avec des zones de contact (9d) intérieures.

7. Roue selon la revendication 5 ou la revendication 6, dans laquelle lesdites ouvertures (7) sont formées dans les parties faisant saillie vers l'intérieur de la portion intermédiaire (9x) de ladite paroi annulaire (9).
